Europäisches Patentamt

European Patent Office

Office européen des brevets

(19)

(11) **EP 0 980 102 B1**

(12) **FASCICULE DE BREVET EUROPEEN**

(45) Date de publication et mention
de la délivrance du brevet:
**24.09.2003 Bulletin 2003/39**

(51) Int Cl.⁷: **H01L 41/09**

(21) Numéro de dépôt: **99402039.4**

(22) Date de dépôt: **11.08.1999**

(54) **Perfectionnements aux moteurs à vibrations**

Verbesserungen an Vibrationswellenmotoren

Improvements related to vibration wave motors

(84) Etats contractants désignés:
**DE ES FR GB IT**

(30) Priorité: **13.08.1998 FR 9810391**

(43) Date de publication de la demande:
**16.02.2000 Bulletin 2000/07**

(73) Titulaire: **SAGEM SA**
**75116 Paris (FR)**

(72) Inventeurs:
• **Audren, Jean Thierry**
**78470 St. Rémy les Chevreuse (FR)**

• **Bezanere, Daniel**
**92160 Antony (FR)**
• **Munier, François**
**78180 Montigny-le-Bretonneux (FR)**

(74) Mandataire: **Schrimpf, Robert et al**
**Cabinet Regimbeau**
**20, rue de Chazelles**
**75847 Paris cedex 17 (FR)**

(56) Documents cités:
**EP-A- 0 907 213**

**Description**

La présente invention est relative aux moteurs à vibrations.

Les moteurs à vibrations sont également connus sous le nom de moteurs ultrasonores pour faire référence à leur fréquence préférée ou de moteurs piezoactifs pour faire référence à leur matériau d'excitation préféré.

Plusieurs structures de moteurs à vibrations présentant un rapport de puissance sur masse important, tout en permettant d'obtenir des puissances mécaniques beaucoup plus élevées que les moteurs à vibrations connus dans l'état de la technique, ont déjà été proposées par la demanderesse. On pourra par exemple à cet égard se référer à ses demandes de brevet français déposées sous les numéros 95-14.1169 et 97-10.948.

Une application particulièrement avantageuse de ces moteurs concerne les commandes de vol secondaires des avions.

Un but de l'invention est de proposer des perfectionnements pour les moteurs à vibrations et en particulier d'optimiser le rendement de ces moteurs.

Les moteurs à vibrations combinent classiquement des modes de vibrations tangentiels, qui correspondent à des déformations selon des directions parallèles à la surface de contact entre le rotor et le stator, et des modes de vibrations normaux, qui correspondent à des déformations selon des directions normales à la surface de contact entre le rotor et le stator.

Les modes de vibrations tangentiels sont ceux sur lesquels est prélevée l'énergie mécanique vibratoire pour être transformée en mouvement continu (couple et vitesse angulaire) grâce au mécanisme non linéaire du frottement. Ces modes sont donc optimisés pour assurer principalement un transfert d'énergie efficace.

A l'opposé, les modes de vibration normaux ne participent pas à la fourniture d'énergie finale. Leur rôle se limite à fournir l'oscillation de la force d'appui du contact rotor-stator nécessaire à la transformation du mouvement oscillatoire tangentiel du stator en mouvement tangentiel continu du rotor. En conséquence, la seule perte d'énergie à laquelle doit faire face un oscillateur normal est celle due à ses pertes internes.

On sait que pour optimiser le transfert d'énergie principal, il convient de faire fonctionner les oscillateurs tangentiels du moteur à leur fréquence de résonance.

L'invention propose quant à elle de faire également fonctionner les oscillateurs normaux à leur fréquence de résonance, c'est à dire de dimensionner le moteur pour que les modes normaux et tangentiels ont des fréquences de résonance très voisines, voire confondues.

Ceci permet en effet de minimiser d'une part les pertes diélectriques dans le matériau actif et d'autre part les pertes dans les circuits électroniques qui l'alimente.

C'est pourquoi l'invention propose un moteur à vibrations comportant un stator et un rotor, ainsi que des moyens d'excitation pour déformer ledit stator selon des modes vibratoires combinant des vibrations tangentielles et des vibrations normales destinées à entraîner en rotation le rotor, caractérisé en ce que le rotor et les moyens d'excitation sont dimensionnés de façon que les modes normaux et tangentiels aient des fréquences de résonance voisines, voire confondues, et correspondent sensiblement à la fréquence d'excitation.

Toutefois, même avec des tolérances de fabrication strictes, il n'est pas possibles d'empêcher la fluctuation de différents paramètres (côtes des pièces, module d'Young, masse volumique, etc...) dont dépendent les fréquences de résonance des modes normaux et tangentiels, par exemple du fait des variations de température auxquelles le moteur peut être soumis ou encore du fait du vieillissement ou de l'usure des différentes pièces du moteur.

C'est pourquoi un autre but de l'invention est de proposer une structure de moteur à vibrations permettant de pallier cet inconvénient et de corriger de façon automatique une dérive de l'écart entre les deux fréquences, ainsi qu'éventuellement tout ou partie, des écarts fixes.

A cet effet, la structure de moteur à vibrations proposée par l'invention comporte avantageusement des moyens pour corriger en fonctionnement la fréquence de résonance du mode normal et/ou du mode tangentiel.

Notamment, si les moyens d'excitation qui génèrent les vibrations normales comportent des éléments actifs piézo-électriques, les moyens électriques qui commandent ces éléments actifs peuvent comporter des moyens pour modifier le module d'Young desdits éléments actifs.

Des exemples avantageux pour la réalisation de tels moyens sont décrits plus loin.

Un autre objet encore de l'invention est de simplifier le dispositif de précontrainte mécanique du matériau piezo-électrique excitant le mode normal, dans le cas d'un moteur comportant dans une carcasse au moins deux paires de plateaux statoriques qui comprennent des éléments actifs de déformation tangentielle, ainsi que deux disques de rotor qui s'étendent entre les plateaux de l'une et l'autre des deux paires, des éléments actifs piézo-électriques pour la génération d'un effort normal s'étendant entre les plateaux de l'une et l'autre des deux paires qui sont en regard, des moyens formant ressort étant interposés entre lesdites paires de plateaux et la carcasse.

Selon la solution proposée à cet effet, les éléments actifs pour la génération d'un effort normal sont excités de façon que les masses de part et d'autre d'un même disque de rotor sont en opposition de phase et les masses de part et d'autre de l'élément actif sont également en opposition de phase.

Les éléments actifs peuvent alors être dimensionnés de façon à vérifier les conditions de précontrainte.

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique en coupe transversale d'un moteur à vibrations conforme à un mode de réalisation possible de l'invention ;
- la figure 2 est une représentation schématique en coupe axiale du moteur de la figure 1 ;
- la figure 3 est une représentation schématique d'un oscillateur normal élémentaire de la structure de la figure 1 ;
- les figures 4a, 4b et 4c illustrent différentes variantes possibles pour le réglage de la fréquence de résonance normale du moteur de la figure 1 ;
- la figure 5 est une autre représentation schématique d'un oscillateur normal élémentaire de la structure de la figure 1.

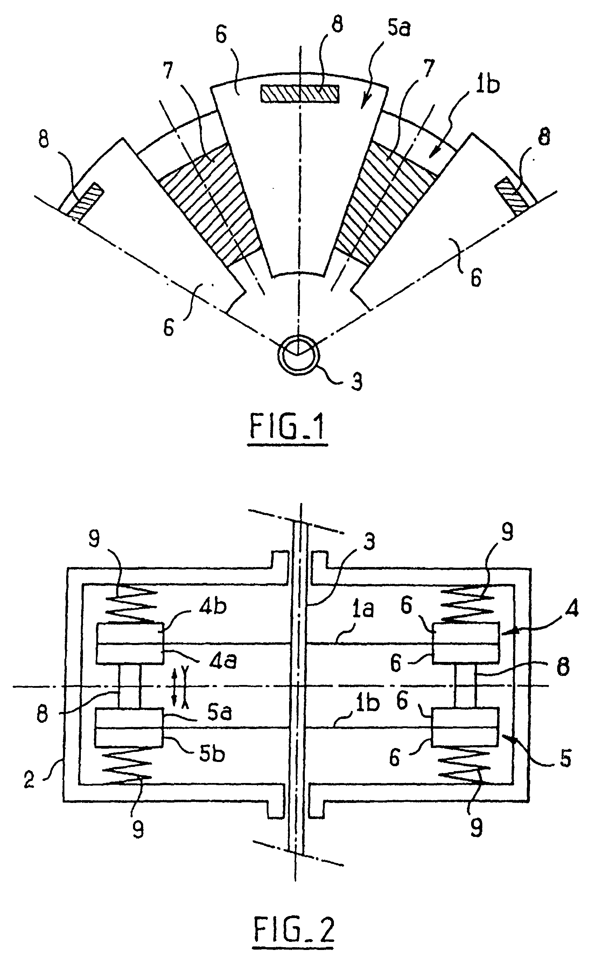

Le moteur à vibrations illustré sur les figures 1 et 2 comporte deux disques de rotor 1a, 1b et deux paires 4, 5 de plateaux statoriques coopérant respectivement avec lesdits disques 1a, 1b.

Les deux disques de rotor 1a, 1b sont des disques flexibles, solidaires d'un même arbre 3 par lequel ils sont montés rotatifs par rapport à une carcasse 2.

Le disque la s'étend entre les deux plateaux statoriques - référencés par 4a, 4b - de la paire 4 ; le disque 1b s'étend quant à lui entre les deux plateaux statoriques - référencés par 5a, 5b - de la paire 5.

Les deux plateaux 4a, 5a sont les deux plateaux statoriques des deux paires 4, 5 qui sont en regard et sont appelés par la suite plateaux intérieurs, les deux plateaux 4b, 5b étant quant à eux appelés plateaux extérieurs.

Chaque plateau statorique 4a, 4b, 5a, 5b est constitué d'une pluralité de secteurs de contact 6 (appelés pétales de stator) qui sont répartis annulairement et qui sont séparés deux à deux par des éléments actifs de déformation tangentielle 7.

Ces pétales ou secteurs de contact 6 sont métalliques. Ils présentent avantageusement, ainsi que cela a été proposé par la demanderesse dans sa demande de brevet français déposée sous le numéro 95-14169, au moins une zone en un alliage à mémoire de forme à proximité de leur surface de contact.

Les secteurs de contact 6 des deux plateaux intérieurs 4a, 5a sont au droit les uns des autres. Des éléments actifs 8 pour la génération d'une force normale sont interposés entre les secteurs 6 de ces deux plateaux intérieurs 4a, 5.

Des moyens 9 formant ressort sont interposés entre la carcasse 2 et les secteurs de contact 6 des plateaux extérieurs 4b, 5b.

Lorsqu'un élément actif 8 s'allonge, les secteurs de contact 6 au droit desquels il est disposé viennent pincer les disques de rotor 1. Lorsqu'il se rétracte, les secteurs de contact 6 qui lui correspondent relâchent les disques 1.

Les moyens 9 sont d'une raideur faible, mais avec une élongation suffisante pour assurer le maintien en pression des secteurs de contact 6 sur les disques de rotor, lorsqu'ils sont comprimés par l'allongement des éléments actifs 7 et 8.

Les éléments actifs 7 et/ou les éléments actifs 8 présentent avantageusement des structures multicouches intégrant en parallèle ou en série des couches en céramique de type piézoélectrique et des couches métalliques et intégrant également des électrodes de commande. Une telle structure multi-couches présente l'avantage de permettre l'utilisation de tensions faibles.

Deux éléments actifs 7 de part et d'autre d'un même secteur 6 sont excités en opposition de phase. De même, deux éléments actifs 8 voisins sont également excités en opposition de phase.

Les éléments actifs 8 pour la génération d'un effort normal sont commandés avec une même fréquence d'excitation que les éléments actifs 7 de déformation tangentiefle.

Conformément à l'invention, le moteur à vibrations qui vient d'être décrit est dimensionné pour que la fréquence de résonance normale et la fréquence de résonance tangentielle soient sensiblement toutes deux égales de cette fréquence d'excitation.

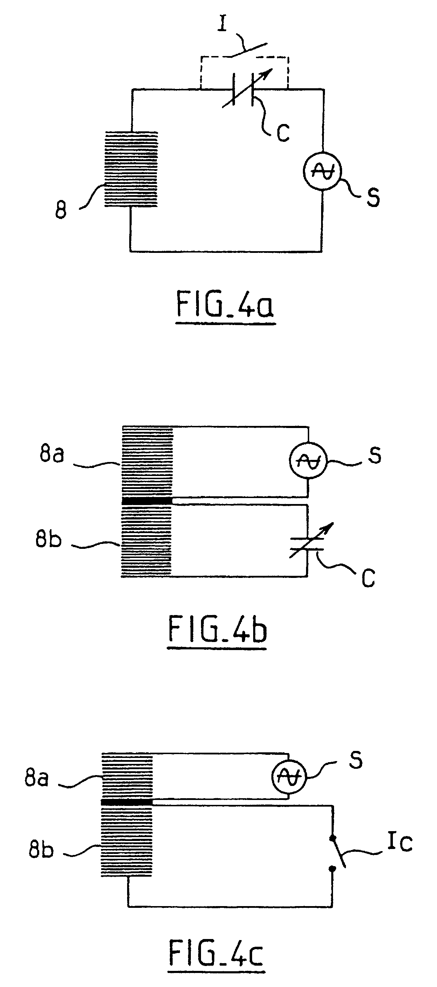

Dans la suite du texte, on s'intéresse à un oscillateur normal élémentaire de la structure, c'est à dire un oscillateur comportant, ainsi qu'illustré sur la figure 3 :

- un élément piézo-électrique 8,
- deux modules 10a, 10b de même masse M, répartis de chaque côté de celui-ci et incluant chacun les pétâtes métalliques 6 et les portions des disques 1a, 1b qui se trouvent au droit de l'élément piézoélectrique.

La fréquence propre F de cet oscillateur normal est :

$$F = \frac{1}{2\pi}\sqrt{\frac{2K}{M}}$$

où K est la raideur de l'élément actif 8 dans le sens des vibrations normales et vaut

$$K = E\frac{S}{l}$$

où E est le module d'Young dudit élément 8, S est sa section et l est sa longueur.

Les matériaux piezo-électriques possèdent deux modules d'Young: l'un lorsque les électrodes sont en circuit ouvert, l'autre lorsque les électrodes sont en court-circuit, le module d'Young lorsque les électrodes sont en circuit ouvert étant le plus élevé. Ces deux modules valent respectivement $\frac{1}{S^D}$ et $\frac{1}{S^E}$ avec

$S^D$ = souplesse en circuit ouvert
$S^E$ = souplesse en circuit fermé

et

$$S^E - S^D = d^2 \varepsilon$$

d = coefficient piezo-électrique
s = permitivité diélectrique

On peut comprendre l'existence de ces deux modules d'Young de la façon suivante : en circuit ouvert l'application d'un effort extérieur créé, en plus de la déformation, des charges qui en restant sur les électrodes créent un champ électrique dont l'effet à travers le coefficient piezo-électrique est de s'opposer à l'effort extérieur. Si les électrodes sont en court-circuit, les charges sont évacuées et le champ électrique est nul.

Or, le matériau piezo-électrique d'un élément actif 8 voit entre ses électrodes l'impédance du générateur électrique qui commande son excitation, c'est à dire une impédance nulle (court-circuit) si le générateur est un générateur de tension et une impédance infinie (circuit ouvert) si le générateur est un générateur de courant.

Conformément à une première variante de l'invention, les moyens pour le réglage de la fréquence propre de l'oscillateur peuvent comporter un montage électrique à commutateur commandé de telle façon que l'élément actif 8 est alternativement alimenté par un générateur de tension et par un générateur de courant, cette commande étant réalisée par un signal à impulsions à largeur modulée dont la fréquence et le rapport cyclique sont ajustés en fonction de la fréquence de résonance que l'on cherche à atteindre.

Une autre solution conforme à l'invention a été illustrée sur la figure 4a. Selon cette solution, le montage qui commande l'élément actif 8 est une source de tension S en série avec une impédance variable C ou est un circuit équivalent. Cette impédance variable C est préférentiellement de type capacitif, de façon à ne pas introduire de perte d'énergie qui constituerait un amortissement complémentaire dans l'oscillateur.

Un élément actif 8 en matériau piezo-électrique est électriquement équivalent à un condensateur. On choisi préférentiellement pour le montage de commande une capacité variable apte à évoluer entre une valeur très importante devant la capacité du matériau piézoélectrique (rapport 10 par exemple) et une valeur petite devant cette capacité (rapport 0,1 par exemple), de façon à pouvoir obtenir l'excursion maximale de raideur et donc de fréquence.

Avantageusement également, il est prévu des moyens de commutation I permettant de court-circuiter l'impédance variable, de façon à obtenir la raideur la plus faible possible.

D'autres variantes possibles pour l'invention ont encore été illustrées sur les figures 4b et 4c.

Ces variantes sont préférées à celle illustrée sur la figure 4a, laquelle présente notamment les inconvénients suivants :

- la variation de la capacité variable entraîne des variations sur la tension de commande de l'élément actif 8 ;
- il est en outre nécessaire de prévoir des moyens inductifs d'accord destinés à diminuer la tension d'alimentation et les pertes et l'inductance de ces moyens inductifs doit varier en même temps que la capacité.

Sur le montage de la figure 4b, le matériau piézoélectrique d'un élément actif 8 est séparé en deux parties 8a et 8b commandées indépendamment.

L'une de ces parties (partie 8a sur la figure 4b) est commandée uniquement par un générateur d'impédance fixe S, qui est par exemple un générateur de tension.

L'autre de ces parties (partie 8b sur la figure 4b) est montée entre les deux extrémités d'une impédance variable (capacité C).

En faisant varier la raideur de la partie 8b en modifiant la valeur de cette impédance variable, on modifie la raideur de l'ensemble de l'élément 8.

Dans la variante illustrée sur la figure 4c, la partie 8b est montée aux bornes non pas d'une capacité variable mais d'un interrupteur Ic commandable.

Selon que cet interrupteur Ic est ouvert ou fermé, la raideur de l'élément 8b passe d'une valeur minimale à une valeur maximale.

Deux types de commande peuvent être envisagés :

- l'une à une fréquence plus élevée que la fréquence d'excitation afin que la raideur moyenne vue sur une période confère au résonateur la période de résonance voulue. On notera que la relation n'est pas une moyenne simple mais dépend des instants auxquels est réalisée la commutation à l'intérieur de la période.
- l'autre à une fréquence plus basse que la fréquence d'excitation afin d'obtenir des groupes de périodes courtes et des groupes de périodes longues de telle sorte que leur composition redonne l'équivalent de la période moyenne désirée.

On peut remarquer que lorsque le circuit est ouvert, la partie 8b peut être utilisée comme capteur de déformation du matériau piézoélectrique.

Cette partie 8b peut également servir de capteur de déformation lorsqu'elle est connectée à une capacité variable de réglage. Evidemment le gradient électrique de la mesure est dans ce cas fonction de la capacité.

Dans ce qui suit, on s'intéresse à la précontrainte du matériau piézo-électrique.

La valeur minimale nécessaire de la précontrainte σp du matériau piezo-électrique pour qu'il n'y ait pas de contrainte de traction est :

$$E\frac{2x_n}{l}$$

l = Longueur du matériau
E = Module d'Young
$x_n$ = Amplitude d'oscillation normale de chacun des pétales métalliques 6.

On doit également avoir :

$$\sigma p + E\frac{2x_n}{l} \leq \sigma_{max}$$

$\sigma_{max}$ = contrainte maximale en compression.

D'autre part la fréquence de résonance définit K tel que :

$$K = (2\pi F)^2 \frac{M}{2}$$

De plus, ΔU la valeur maximale de la partie oscillante de la force d'appui rotor/stator est :

$$\Delta U = \frac{M}{2}(2\pi F)^2 x_n,$$

Pour que le rotor et le stator restent constamment en appui, les ressorts de précontrainte doivent produire une force statique Uo supérieure ou égale à ΔU. D'autre part, il n'est pas intéressant que cette force soit nettement supérieure à ΔU car elle provoque une chute du rendement du moteur. Il est donc souhaitable que Uo soit pratiquement égale à ΔU.

Si l'on désire pour simplifier la construction mécanique, que cette force Uo assure également la précontrainte de. la céramique, on doit avoir

$$\frac{Uo}{S} = \sigma p$$

ce qui, tout calcul fait donne :

$$\sigma p = E\frac{x_n}{l}$$

On voit donc qu'il n'est pas possible de satisfaire la première relation

$$\sigma p \geq E\frac{2x_n}{l}$$

Pour résoudre ce problème, une première solution consisterait à réaliser l'élément de raideur K à l'aide de deux matériaux en parallèle, l'un piezo-électrique, l'autre métallique. Le métal peut, de par des capacités de tenue en traction, assurer la partie de précontrainte manquante. Bien que cette solution soit réalisable, elle présente des inconvénients de fabrication pour deux raisons principales :

- pour assurer la précontrainte le métal doit-être ancré solidement dans les masses ou former une petite boîte encapsulant le matériau piezo-électrique ; cette petite boîte doit être fermée en précontrainte et limite sévèrement l'accès au matériau piezo-électrique nécessaire au câblage ;
- il n'est pas aisé de maintenir la précontrainte constante en fonction de la température sauf en concevant la partie métallique nettement plus souple que la partie piézo-électrique en l'entourant ou en lui donnant une forme ondulée.

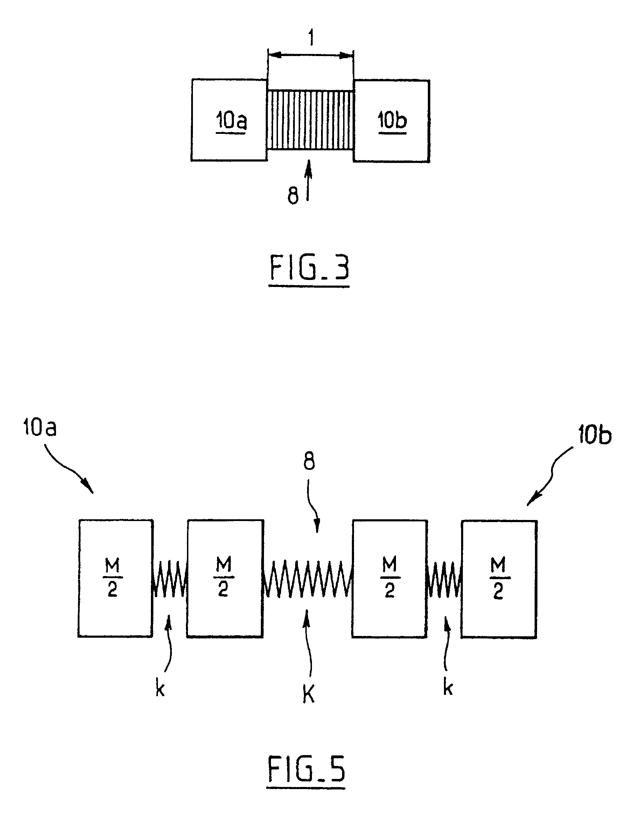

La solution proposée dans l'invention tire partie, ainsi qu'illustré sur la figure 5, de la souplesse d'interface rotor-stator.

La demande de brevet 9514169 explique l'intérêt de cette souplesse pour améliorer le rendement de conversion des vibrations en mouvement continu à l'aide de champ de pions métalliques. Il existe une latitude de choix de la raideur normale k de cette structure d'interface.

Selon un aspect de la présente invention, il est proposé de choisir cette raideur d'interface de façon à résoudre le problème de la précontrainte du matériau piezo-électrique.

On remarque d'abord que l'oscillateur mécanique décrit en référence à la figure 1 peut être actionné selon deux modes de vibrations normales différents.

Dans le premier mode, les pétales métalliques 6 de part et d'autre du disque 1a (respectivement 1b) sont excités en phase entre eux et en opposition de phase par rapport aux pétales de part et d'autre de l'autre disque du rotor, c'est à dire du disque 1b (respectivement 1a).

Ce mode d'excitation correspond à celui qui était décrit dans la demande FR-97 10948 et à une fréquence de résonance de :

$$F_1 = \frac{1}{2\pi}\sqrt{\frac{2K}{M} + \frac{2k}{M} - \sqrt{\frac{4K^2}{M^2} + \frac{4k^2}{M^2}}}$$

Toutefois, un second mode d'excitation est envisageable. Dans ce second mode, les masses de part et d'autre d'un même disque 1a, 1b du rotor sont excitées en opposition de phase, tandis que les masses de part et d'autre d'un élément actif sont également en opposition de phase.

La fréquence de ce deuxième mode est :

$$F_2 = \frac{1}{2\pi}\sqrt{\frac{2K}{M} + \frac{2k}{M} + \sqrt{\frac{4K^2}{M^2} + \frac{4k^2}{M^2}}}$$

Ces deux fréquences encadrent la fréquence

$$F = \frac{1}{2\pi}\sqrt{\frac{2K}{M}} = F$$

définie précédemment et qui peut être retrouvée dans la formule de F1 en faisant tendre k vers l'infini.

On voit que pour une valeur $F_o$ donnée de fréquence de résonance, les termes complémentaires sous le radical permettent, en travaillant avec le deuxième mode propre de vibrations, de choisir une valeur de K plus faible pour la même valeur de Fo. Il devient alors possible de choisir, dans $K = \frac{ES}{l}$, S plus petit ou l plus grand et de satisfaire à l'exigence de la précontrainte dans le matériau piezo-électrique.

**Revendications**

1. Moteur à vibrations comportant un stator et un rotor, ainsi que des moyens d'excitation pour déformer ledit stator selon des modes vibratoires combinant des vibrations tangentielles et des vibrations normales destinées à entraîner en rotation le rotor, **caractérisé en ce que** le rotor (1a, 1b) et les moyens d'excitation (7, 8) sont dimensionnés de façon que les modes normaux et tangentiels aient des fréquences de résonance voisines, voire confondues, et correspondent sensiblement à la fréquence d'excitation.

2. Moteur selon la revendication 1, **caractérisé en ce qu'**il comporte des moyens (C, S, l) pour corriger en fonctionnement la fréquence de résonance du mode normal et/ou du mode tangentiel.

3. Moteur selon la revendication 2, **caractérisé en ce que** les moyens d'excitation (8) qui génèrent les vibrations normales comportent des éléments actifs piézo-électriques et **en ce que** les moyens électriques qui commandent ces éléments actifs (8) comportent des moyens pour modifier le module d'Young desdits éléments (8).

4. Moteur selon la revendication 3, **caractérisé en ce que** lesdits moyens électriques qui commande un élément actif (8) comportent un montage à commutateur commandé de telle façon que ledit élément actif est alternativement alimenté par un générateur de tension et par un générateur de courant, la fréquence et le rapport cyclique de cette commande étant fonction de la fréquence de résonance souhaitée pour le mode de vibration normal.

5. Moteur selon la revendication 3, **caractérisé en ce que** les moyens électriques qui commandent un élément actif (8) est constitué par une source de tension (S) en série avec une impédance variable (C) ou par un circuit équivalent.

6. Moteur selon la revendication 5, **caractérisé en ce qu'**il comporte des moyens permettant de court-circuiter l'impédance variable.

7. Moteur selon la revendication 3, **caractérisé en ce qu'**un élément actif (8) est décomposé en deux parties (8a, 8b), l'une qui est commandée par un générateur d'impédance fixe, l'autre qui est montée entre les deux extrémités d'une impédance variable (C) ou entre les extrémités d'un interrupteur commandé (1),

8. Moteur selon l'une des revendications 5 à 7, **caractérisé en ce que** l'impédance variable (C) est de type capacitive.

9. Moteur selon l'une des revendications précédentes, **caractérisé en ce qu'**il comporte dans une carcasse au moins deux paires de plateaux statoriques qui comprennent des éléments actifs de déformation tangentielle (7), ainsi que deux disques de rotor (1a, 1b) qui s'étendent entre les plateaux de l'une et l'autre des deux paires, des éléments actifs piézo-électriques (8) pour la génération d'un effort normal s'étendant entre les plateaux de l'une et l'autre des deux paires qui sont en regard, des moyens formant ressort étant interposés entre lesdites paires de plateaux et la carcasse, et **en ce que** les éléments actifs pour la génération d'un effort normal sont excités de façon que les masses de part et d'autre d'un même disque de rotor sont en opposition de phase et les masses de part et d'autre de l'élément actif sont également en opposition de phase, les éléments actifs sont dimensionnés de façon à vérifier les conditions de précontrainte.

10. Moteur pour la mise en mouvement d'une surface aérodynamique d'aéronef, **caractérisé en ce qu'**il est constitué par un moteur à vibrations selon l'une des revendications précédentes.

**Patentansprüche**

1. Schwingungswellenmotor mit einem Stator und einem Rotor, sowie Erregermittel zum Deformieren des Stators entsprechend von Schwingungsmoden, die Tangentialschwingungen und Normalschwingungen kombinieren, die dazu bestimmt sind, den Rotor in Drehung zu versetzen, **dadurch gekennzeichnet, daß** der Rotor (1a, 1b) und die Erregermittel (7, 8) derart dimensioniert sind, daß die Normalund Tangentialmoden benachbarte, insbesondere überlappende und im wesentlichen der Erregerfrequenz entsprechende Resonanzfrequenzen haben.

2. Motor nach Anspruch 1, **dadurch gekennzeichnet, daß** er Mittel (C, S, I) zum Korrigieren der Resonanzfrequenz des Normalmodus und/oder des Tangentialmodus im Betrieb aufweist.

3. Motor nach Anspruch 2, **dadurch gekennzeichnet, daß** die Erregermittel (8), welche die Normalschwingungen erzeugen, aktive piezoelektrische Elemente umfassen, und daß die elektrischen Mittel, welche diese aktiven Elemente (8) steuern, Mittel zum Modifizieren des Elastizitätsmoduls der besagten Elemente (8) aufweisen.

4. Motor nach Anspruch 3, **dadurch gekennzeichnet, daß** die elektrischen Mittel, die ein aktives Element (8) steuern, eine Umschaltschaltung aufweisen, die derart gesteuert wird, daß das aktive Element abwechselnd von einem Spannungsgenerator und von einem Stromgenerator versorgt wird, wobei die Frequenz und das Zyklusverhältnis dieser Steuerung eine Funktion der für den Normalschwingungsmodus gewünschten Resonanzfrequenz ist.

5. Motor nach Anspruch 3, **dadurch gekennzeichnet, daß** die elektrischen Mittel, die ein aktives Element (8) steuern, von einer Spannungsquelle (S) in Serie mit einer variablen Impedanz (C) oder von einer äquivalenten Schaltung gebildet werden.

6. Motor nach Anspruch 5, **dadurch gekennzeichnet, daß** er Mittel aufweist, die ein Kurzschließen der variablen Impedanz ermöglichen.

7. Motor nach Anspruch 3, **dadurch gekennzeichnet, daß** ein aktives Element (8) in zwei Teile (8a, 8b) aufgeteilt ist, von denen der eine von einem Generator mit fester Impedanz gesteuert wird, und der andere zwischen die beiden Enden einer variablen Impedanz (C) oder zwischen die Enden eines gesteuerten Schalters (I) geschaltet ist.

8. Motor nach einem der Ansprüche 5 bis 7, **dadurch gekennzeichnet, daß** die variable Impedanz (C) kapazitiver Art ist.

9. Motor nach einem der vorhergehenden Ansprüche, **dadurch gekennzeichnet, daß** er in einem Gehäuse wenigstens zwei Paare an Statorplatten, die aktive Tangentialdeformationselemente (7) umfassen, sowie zwei Rotorscheiben (1a, 1b), die sich zwischen den Platten von dem einen und dem anderen der beiden Paare erstrecken, piezoelektrische aktive Elemente (8) für die Erzeugung einer Normalkraft, die sich zwischen den Platten des einen und des anderen der beiden Paare erstreckt, die sich gegenüberliegen, und eine Federung bildende Mittel umfaßt, die zwischen den Plattenpaaren und dem Gehäuse angeordnet sind, und daß die aktiven Elemente für die Erzeugung einer Normalkraft derart erregt werden, daß die Massen beiderseits der selben Rotorscheibe sich in entgegengesetzten Phasen befinden und die Massen beiderseits des aktiven Elements sich ebenfalls in entgegengesetzten Phasen befinden, wobei die aktiven Elemente derart dimensioniert sind, daß sie die Vorspannungsbedingungen erfüllen.

10. Motor zum Versetzen einer aerodynamischen Luftfahrzeugoberflache in Bewegung, **dadurch gekennzeichnet, daß** er durch einen Schwingungswellenmotor nach einem der vorgenannten Ansprüche gebildet ist.

**Claims**

1. A vibration motor including a stator and a rotor and excitation means for deforming said stator in vibratory modes combining tangential vibrations and normal vibrations intended to drive rotation of the rotor, **characterized in that** the rotor (1a, 1b) and the excitation means (7, 8) have dimensions such that the normal and tangential modes have similar resonant frequencies, or even the same resonant frequency, and correspond substantially to the excitation frequency.

2. A motor according to claim 1 **characterized in that** it includes means (C, S, I) for correcting the resonant frequency of the normal mode and/or the tangential mode in operation.

3. A motor according to claim 2 **characterized in that** the excitation means (8) which generate the normal vibrations include piezo-electric active components and **in that** the electrical means that drive these active components (8) include means for modifying the Young's modulus of said components (8).

**4.** A motor according to claim 3 **characterized in that** said electrical means which drive an active component (8) include a switch circuit controlled so that said active component is alternatively connected to a voltage generator and to a current generator, the driving frequency and duty cycle depending on the required resonant frequency for the normal vibration mode.

**5.** A motor according to claim 3 **characterized in that** the electrical means which drive an active component (8) comprises [ sic] a voltage supply (S) in series with a variable impedance (C) or an equivalent circuit.

**6.** A motor according to claim 5 **characterized in that** it includes means for short circuiting the variable impedance.

**7.** A motor according to claim 3 **characterized in that** an active component (8) is in two parts (8a, 8b), one which is driven by a fixed impedance generator and the other which shunts the variable impedance (C) or is connected between the ends of a selectively operable switch (I).

**8.** A motor according to any of claims 5 to 7 **characterized in that** the variable impedance (C) is of the capacitive type.

**9.** A motor according to any of the preceding claims **characterized in that** it includes in a casing at least two pairs of stator plates which comprise tangential deformation active components (7), as well as two rotor discs (1a, 1b) which lie between the plates of both pairs, piezo-electric active components (8) for generating a normal force which lie between the plates of both of the facing pairs, spring means being disposed between said pairs of plates and the casing, and **in that** the active components for generating a normal force are excited so that the masses on respective opposite sides of the same rotor disc are in antiphase and the masses on respective opposite sides of the active member are also in antiphase, the active components being dimensioned so as to comply with prestressing conditions.

**10.** A motor for moving an aerodynamic control surface of an aircraft **characterized in that** it comprises a vibration motor according to any of the preceding claims.

EP 0 980 102 B1

FIG.1

FIG.2

9

FIG.4a

FIG.4b

FIG.4c

## FIG.3

## FIG.5